# EUROPÄISCHE PATENTSCHRIFT

(11) **EP 3 517 661 B1**
(45) Veröffentlichungstag und Bekanntmachung des Hinweises auf die Patenterteilung: **21.10.2020**
(21) Anmeldenummer: 19150034.7
(22) Anmeldetag: 02.01.2019
(51) Int. Cl.: D01H 9/18, B65H 67/06

(54) **AUFLAUFSPULEN HERSTELLENDE TEXTILMASCHINE UND VERFAHREN ZUM BETRIEB EINER SOLCHEN**
BOBBIN-PRODUCING TEXTILE MACHINE AND METHOD FOR OPERATING THE SAME
MACHINE TEXTILE PRODUISANT DES BOBINES RÉCEPTRICES ET PROCÉDÉ DE FONCTIONNEMENT D'UNE TELLE MACHINE TEXTILE

(30) Priorität: 05.01.2018 DE 102018100183
(43) Veröffentlichungstag der Anmeldung: 31.07.2019
(73) Patentinhaber: Saurer Spinning Solutions GmbH & Co. KG, 52531 Übach-Palenberg (DE)
(72) Erfinder: Hansen, Bodo, 41812 Erkelenz (DE)
(74) Vertreter: Schniedermeyer, Markus

(56) Entgegenhaltungen:
- EP-A1- 1 902 991
- JP-A- H0 733 332
- US-A- 4 582 270

## Beschreibung

Die vorliegende Erfindung betrifft eine Auflaufspulen herstellende Textilmaschine, umfassend mindestens eine Arbeitsstelle mit einer Spulvorrichtung zum Bespulen der Auflaufspulen und eine Ablage für bespulte Auflaufspulen, ein Ermittlungselement zum Ermitteln der Masse einer jeden auf die Ablage abzulegenden Auflaufspule, einen Summierer zum Aufsummieren der ermittelten Massen der auf die Ablage abzulegenden Auflaufspulen, und ein Ausgabeelement zum Ausgeben eines Ausgabesignals, wenn die Summe der ermittelten Massen der Auflaufspulen einen vordefinierten Schwellwert überschreitet.

Weiterhin betrifft die vorliegende Erfindung ein Verfahren zum Betrieb einer Auflaufspulen herstellenden Textilmaschine mit mindestens einer Arbeitsstelle mit einer Spulvorrichtung zum Bespulen der Auflaufspulen und mit einer Ablage für bespulte Auflaufspulen, wobei das Verfahren die Schritte
- Ermitteln der Masse einer jeden auf die Ablage abzulegenden Auflaufspule, und
- Aufsummieren der ermittelten Massen der auf die Ablage abzulegenden Auflaufspulen, und
- Ausgeben eines Ausgabesignals, wenn die Summe der ermittelten Massen der Auflaufspulen einen vordefinierten Schwellwert überschreitet, umfasst.

Es ist bekannt, Fäden nach deren Herstellung auf Auflaufspulen aufzuspulen oder Fäden von einer Vorlagespule zu einer weiteren Auflaufspule umzuspulen. Dazu sind verschiedenste Verfahren und Auflaufspulen herstellende Textilmaschinen bekannt. Diese haben aber oft den Nachteil, dass ein Abtransport der bespulten Auflaufspulen ineffizient ist.

Die JP H07 33332 A offenbart ein Transportsystem für bespulte Auflaufspulen, bei dem die Anzahl der Auflaufspulen auf dem Transportband gezählt wird und wobei der Antrieb des Transportbandes und die Wechselaktion der Wechselvorrichtung in Reaktion auf das Zählergebnis erfolgt.

Die EP 1 902 991 A1 offenbart einen Spulautomaten mit einer Vielzahl von Spulstellen und einem Transportband zur Aufnahme der gewechselten Auflaufspulen. Am Ende des Transportbandes werden die Auflaufspulen zur Qualitätsüberwachung gewogen.

Die US 4 582 270 A offenbart ein Verfahren zum Transport von vollen Auflaufspulen in einer Spinnmaschine mit einer Vielzahl von Spinnstellen. Ein angeforderter Wechsel der Auflaufspule wird nur durchgeführt, wenn der für die Auflaufspule vorgesehene Platz auf dem Transportband frei ist.

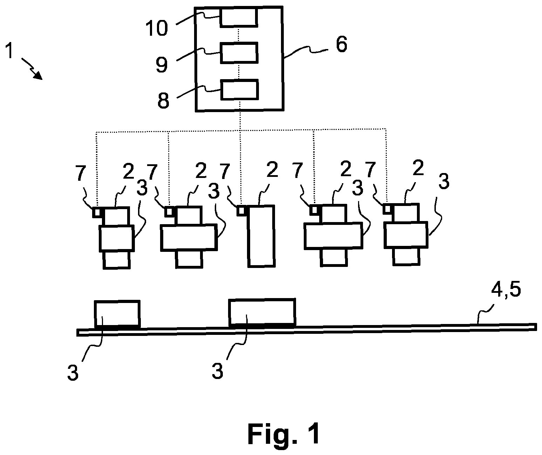

Fig. 1 zeigt eine schematische Darstellung einer Auflaufspulen herstellenden Textilmaschine.

Es werden eine Auflaufspulen herstellende Textilmaschine und ein Verfahren zum Betrieb einer Auflaufspulen herstellenden Textilmaschine beschrieben, bei denen bespulte Auflaufspulen besonders effizient zu Chargen gruppiert oder zusammengefasst werden. Das beschriebene Verfahren wird vorzugsweise mit der beschriebenen Auflaufspulen herstellenden Textilmaschine durchgeführt. Die beschriebene Auflaufspulen herstellende Textilmaschine wird vorzugsweise gemäß dem beschriebenen Verfahren betrieben.

Fig. 1 zeigt eine Auflaufspulen herstellende Textilmaschine 1. Die Auflaufspulen herstellende Textilmaschine 1 ist dazu bestimmt und eingerichtet, Fäden auf Auflaufspulen 3 aufzuspulen. Als Fäden kommen dabei insbesondere Textilfäden in Betracht. Die Fäden können mit der Auflaufspulen herstellenden Textilmaschine 1 insbesondere unmittelbar nach einer Herstellung oder nach einer Bearbeitung der Fäden oder von Vorlagespulen auf die Auflaufspulen 3 aufgespult werden.

Zum Bespulen der Auflaufspulen 3 weist die Auflaufspulen herstellende Textilmaschine 1 mindestens eine Arbeitsstelle mit einer Spulvorrichtung 2 auf. Im Beispiel der Fig. 1 sind fünf Spulvorrichtungen 2 gezeigt. Es ist aber insbesondere auch möglich, dass die Auflaufspulen herstellende Textilmaschine 1 eine weit größere Anzahl an Arbeitsstellen mit Spulvorrichtungen 2 aufweist. Die Auflaufspulen herstellende Textilmaschine 1 kann beispielsweise 480 oder sogar 720 Arbeitsstellen mit Spulvorrichtungen 2 aufweisen. An einer Spulvorrichtung 2 kann eine Auflaufspule 3 bespult werden. Sobald die Auflaufspule 3 fertig bespult ist, kann die Auflaufspule 3 aus der Spulvorrichtung 2 entnommen werden und es kann eine weitere Auflaufspule 3 in der Spulvorrichtung 2 bespult werden.

Bei dem Spul- oder Wickelvorgang des Fadens auf die Auflaufspule 3 kann beispielsweise ein Faden einer vorbestimmten Länge auf die Auflaufspule 3 aufgespult werden. Alternativ kann ein Faden mit einem vorbestimmten Gewicht auf die Auflaufspule 3 aufgebracht werden, sodass eine Auflaufspule 3 (fertig) bespult ist, wenn der aufgespulte Faden die vorbestimmte Länge oder das vorbestimmte Gewicht aufweist. Typischerweise werden solche fertig bespulten Auflaufspulen 3 dann nicht einzeln, sondern in Chargen zur weiteren Ver- oder Bearbeitung von der Auflaufspulen herstellende Textilmaschine 1 abtransportiert. Dazu werden die fertig bespulten Auflaufspulen 3 auf einer Ablage 4 der Auflaufspulen herstellenden Textilmaschine gesammelt und anschließend abtransportiert, wenn die Charge vollständig ist.

Die fertig bespulten Auflaufspulen 3 können auf eine Ablage 4 der Auflaufspulen herstellenden Textilmaschine 1 abgelegt werden. Dazu weist die Auflaufspulen herstellende Textilmaschine 1 entweder an jeder Spulvorrichtung 2 eine jeweilige Einrichtung zum Ausstoßen der Auflaufspule 3 auf oder ein Serviceaggregat überführt die Auflaufspule 3 auf die Ablage 4, bevor eine Leerhülse eingelegt wird, die dann zu einer Auflaufspule 3 bespult wird. Die Ablage 4 ist vorzugsweise dazu bestimmt und eingerichtet, die bespulten Auflaufspulen 3 von den Spulvorrichtungen 2 aufzunehmen. Vorzugsweise ist die Ablage 4 wie im Beispiel der Fig. 1 gezeigt als ein Transportband 5 ausgebildet. Das Transportband 5 steht vorzugsweise grundsätzlich still. Sobald das Transportband 5 vollständig beladen ist, wird das Transportband 5 vorzugsweise gestartet, so dass alle zu dem Zeitpunkt auf dem Transportband 5 befindlichen bespulten Auflaufspulen 3 mit dem Transportband 5 abtransportiert werden können. Sobald alle auf dem Transportband 5 befindlichen bespulten Auflaufspulen 3 abtransportiert sind, wird das Transportband 5 vorzugsweise wieder ausgeschaltet, so dass das Transportband 5 wieder stillsteht. Anschließend kann das Transportband 5 erneut beladen werden, bis es bei vollständiger Beladung erneut gestartet wird.

Im Beispiel der Fig. 1 sind die in den Spulvorrichtungen 2 gezeigten Auflaufspulen 3 unterschiedlich weit bespult. Das ist durch die unterschiedliche Ausdehnung der Auflaufspulen 3 in einer Rechts-Links-Richtung in der Darstellung der Fig. 1 angedeutet. Die mittlere Spulvorrichtung 2 ist in einer Situation gezeigt, in der gerade ein Spulwechsel stattgefunden hat. Das bedeutet, dass die Auflaufspule 3 auf das Transportband 5 abgelegt ist und ein Bespulen einer Leerhülse zu einer neuen Auflaufspule 3 in der Spulvorrichtung 2 noch nicht begonnen hat. Auch in der Spulvorrichtung 2 ganz links hat ein Spulwechsel stattgefunden, so dass die eine bespulte Auflaufspule 3 unterhalb der Spulvorrichtung 2 auf dem Transportband 5 liegt, während eine neue Auflaufspule 3 bereits zu bespulen begonnen wurde. Weiterhin ist zu erkennen, dass die auf dem Transportband 5 abgelegten Auflaufspulen 3 unterschiedlich ausgedehnt sind. Das soll andeuten, dass auf die verschiedenen Auflaufspulen 3 Fäden unterschiedlicher Länge aufgespult werden können. Dabei kann in einem Produktionsprozess jede Auflaufspule 3 mit einem Faden unterschiedlicher Länge bespult werden. Alternativ ist es möglich, dass bei einem ersten Produktionsprozess jede Auflaufspule 3 mit einem Faden einer ersten Fadenlänge bespult wird, während bei einem zweiten Produktionsprozess jede Auflaufspule 3 mit einem Faden einer von der ersten Fadenlänge verschiedenen zweiten Fadenlänge bespult wird.

Der Abtransport der bespulten Auflaufspulen 3 ist dann besonders effizient, wenn das Transportband 5 immer genau bei vollständiger Beladung gestartet wird. Wird das Transportband 5 vorher gestartet, erfolgt ein Abtransport zu mehr Zeitpunkten als nötig. Die vollständige Beladung des Transportbandes 5 kann insbesondere über die Massen der Auflaufspulen 3 auf dem Transportband 5 definiert sein. So kann das Transportband 5 insbesondere dann als vollständig beladen betrachtet werden, wenn eine zulässige Gesamtmasse der sich zeitgleich auf dem Transportband 5 befindlichen Auflaufspulen 3 einen vordefinierten Schwellwert überschreitet. Die zulässige Gesamtmasse kann beispielsweise bei 1200 kg liegen.

In einer Ausführungsform ist die Ablage 4 als Transportband 5 ausgebildet. Alternativ kann die Ablage 4 beispielsweise Container umfassen, in die die bespulten Auflaufspulen 3 abgelegt werden. Sobald ein Container vollständig mit bespulten Auflaufspulen 3 beladen ist, kann der Container abtransportiert werden. Auch in dem Fall kann die vollständige Beladung durch die Gesamtmasse der Auflaufspulen 3 in dem Container definiert sein.

Es wäre denkbar, die vollständige Beladung der Ablage 4 dadurch zu ermitteln, dass für alle Auflaufspulen 3 die gleiche Masse angenommen wird und dass damit aus der zulässigen Gesamtmasse eine zulässige Anzahl an Auflaufspulen 3 ermittelt wird. Sobald die zulässige Anzahl der Auflaufspulen 3 auf der Ablage 4 erreicht ist, kann dann ein Abtransport erfolgen. Ein derartiges Vorgehen kann aber insbesondere dann ineffizient sein, wenn die Auflaufspulen 3 unterschiedliche Massen haben. Sind einzelne der Auflaufspulen 3 leichter als die angenommene Masse, kann auch bei Erreichen der zulässigen Anzahl an Auflaufspulen 3 die zulässige Gesamtmasse noch unerreicht sein. Würde für die Masse der Auflaufspulen 3 ein kleinerer Wert angenommen, bestünde die Gefahr, dass die zulässige Gesamtmasse überschritten wird.

Beispielsweise liegt bei einer zulässigen Gesamtmasse von 1200 kg und einer angenommenen Masse der einzelnen Auflaufspulen 3 von 5 kg die zulässige Anzahl der Auflaufspulen 3 bei 240. Werden nun 240 Auflaufspulen 3 auf das Transportband 5 abgelegt, beträgt deren Gesamtmasse bei einer tatsächlichen Masse von 5 kg pro Auflaufspule 3 genau 1200 kg. Sind die Auflaufspulen 3 aber tatsächlich beispielsweise nur jeweils 4 kg schwer, beträgt die Gesamtmasse nur 960 kg. Bei einer Spulenmasse von nur 3 kg beträgt die Gesamtmasse sogar nur 720 kg. Würde daher die Spulenanzahl von 240 als Kriterium für den Abtransport herangezogen, würde das Transportband 5 bei den 4 kg schweren Auflaufspulen 3 um 240 kg unterbeladen sein, bei den 3 kg schweren Auflaufspulen 3 sogar um 480 kg. Ein Abtransport mit unterbeladenem Transportband 5 ist allerdings ineffizient.

Mit der beschriebenen Auflaufspulen herstellende Textilmaschine 1 und mit dem beschriebenen Verfahren kann die vollständige Beladung der Ablage 4 besonders gut erkannt werden, so dass der Abtransport der bespulten Auflaufspulen 3 besonders effizient erfolgen kann. Dazu werden bei dem beschriebenen Verfahren die Massen der einzelnen Auflaufspulen 3 ermittelt.

Beträgt die zulässige Gesamtmasse also 1200 kg, können so beispielsweise 240 Auflaufspulen 3 mit jeweils 5 kg Masse, 300 Auflaufspulen 3 mit jeweils 4 kg Masse oder 400 Auflaufspulen 3 mit jeweils 3 kg Masse auf das Transportband 5 abgelegt werden. In allen Fällen wird die zulässige Gesamtmasse vollständig ausgenutzt. Das beschriebene Verfahren bietet damit insbesondere bei leichteren Auflaufspulen den Vorteil einer Gewichtssummierung jeder Auflaufspule 3 gegenüber einer reinen Spulenzählung.

Die Masse der Auflaufspule 3 wird vorzugsweise ermittelt, bevor die Auflaufspule 3 auf die Ablage 4 abgelegt wird. Das erfolgt vorzugsweise derart, dass die jeweilige Masse mindestens einer der Auflaufspulen 3 basierend auf einer Länge eines auf die Auflaufspule 3 gespulten Fadens ermittelt wird. Vorzugsweise wird für jede der Auflaufspulen 3 die Masse auf diese Weise ermittelt. Insbesondere kann aus der Länge des auf die Auflaufspule 3 aufgespulten Fadens dessen Masse berechnet werden. Anschließend kann ein Leergewicht der Auflaufspule 3 respektive der Leerhülse hinzuaddiert werden und so die Masse der Auflaufspule 3 erhalten werden. Die Länge der Fäden kann insbesondere wie im Beispiel der Fig. 1 gezeigt über einen jeweiligen Fadenlängenerfasser 7 an jeder der Spulvorrichtungen 2 ermittelt werden. Die Masse der Auflaufspulen 3 kann aus der Länge des aufgespulten Fadens insbesondere mit einem Ermittlungselement 8 ermittelt werden, das wie in Fig. 1 gezeigt beispielsweise in einer Steuereinheit 6 vorgesehen sein kann. Das Ermittlungselement 8 kann als Hardware ausgebildet sein und/oder als Software in der Steuereinheit 6 implementiert sein. Die Fadenlängenerfasser 7 sind vorzugsweise mit der Steuereinheit 6 beziehungsweise mit dem Ermittlungselement 8 verbunden. Die Länge der Fäden kann von dem Fadenlängenerfasser 7 beispielsweise über ein Signal an das Ermittlungselement 8 ausgegeben werden und von dem Ermittlungselement 8 in eine Masse der jeweiligen Auflaufspule 3 umgerechnet werden. Es ist möglich, dass ein einziges Ermittlungselement 8 für die Ermittlung der Massen aller Auflaufspulen 3 vorgesehen ist. Es ist aber auch möglich, dass mehrere Ermittlungselemente 8 vorgesehen sind, die jeweils einer Gruppe von Spulvorrichtungen 2 zugeordnet sind. Auch kann jede Spulvorrichtung 2 ein jeweiliges Erfassungselement 8 aufweisen, von dem aus über ein entsprechendes Signal die Masse der Auflaufspule 3 an die Steuereinheit 6 übermittelt werden kann. So ist es insbesondere möglich, dass die Erfassungselemente 8 in das Serviceaggregat integriert sind, so dass die Masse der Auflaufspule 3 von dem Serviceaggregat insbesondere während eines Ablagevorgangs als ein Signal an die Steuereinheit 6 ausgegeben wird. Die Übermittlung der Masse der Auflaufspulen 3 kann insbesondere über ein Signal, beispielsweise in Form eines Telegramms erfolgen.

Die Ermittlung der Massen der Auflaufspulen 3 über die Länge der aufgespulten Fäden ist bevorzugt, aber nicht notwendig. Alternativ oder zusätzlich ist es möglich, dass die jeweilige Masse mindestens einer der Auflaufspulen 3 durch Messung ermittelt wird. Das kann insbesondere durch einen Massensensor erfolgen, der in der jeweiligen Spulvorrichtung 2 derart angeordnet ist, dass die Masse der Auflaufspule 3 bereits beim Aufspulen und/oder unmittelbar nach dem Aufspulen durch Messung ermittelt werden kann. Der Massensensor kann insbesondere in dem Serviceaggregat integriert sein.

Nachdem die Massen der einzelnen Auflaufspulen 3 ermittelt worden sind, werden diese beim beschriebenen Verfahren aufsummiert. Die beschriebene Auflaufspulen herstellende Textilmaschine 1 weist dazu einen Summierer 9 auf. Der Summierer 9 kann insbesondere, wie im Beispiel der Fig. 1 gezeigt, in der Steuereinheit 6 vorgesehen sein. Insbesondere kann der Summierer 9 als Hardware und/oder Software implementiert sein. Aufsummiert werden vorzugsweise die Massen der Auflaufspulen 3, die sich zeitgleich in der Ablage 4 befinden. Damit ist das Ergebnis des Aufsummierens die Gesamtmasse aller zeitgleich in der Ablage 4 befindlichen Auflaufspulen 3. Das ist die Größe, die mit der zulässigen Gesamtmasse der sich zeitgleich auf der Ablage 4 befindlichen Auflaufspulen 3 zu vergleichen ist. Nachdem die Auflaufspulen 3 abtransportiert worden sind, wird die Bildung der Summe vorzugsweise zurückgesetzt. Das bedeutet, dass die Bildung der Summe beispielsweise nach einem Abtransport der Auflaufspulen 3 durch Starten des Transportbandes 5 neu von null beginnt. Damit kann der Tatsache Rechnung getragen werden, dass nur die Gesamtmasse der zeitgleich auf dem Transportband 5 befindlichen Auflaufspulen 3 unterhalb der zulässigen Gesamtmasse der sich zeitgleich auf dem Transportband 5 befindlichen Auflaufspulen 3 liegen muss. Die Massen von Auflaufspulen 3, die bereits abtransportiert worden sind und die sich nicht mehr auf dem Transportband 5 befinden, sind dabei irrelevant.

Anhand der Summe der Massen der Auflaufspulen 3 kann insbesondere entschieden werden, wann die Ablage 4 als vollständig beladen aufgefasst werden soll. So wird ein Ausgabesignal ausgegeben, wenn die Summe der ermittelten Massen der Auflaufspulen 3 einen vordefinierten Schwellwert überschreitet. Der vordefinierte Schwellwert kann insbesondere die zulässige Gesamtmasse der sich zeitgleich auf der Ablage 4 beziehungsweise auf dem Transportband 5 befindlichen Auflaufspulen 3 sein. Sobald dieser Schwellwert erreicht ist, erfolgt vorzugsweise ein Abtransport der Auflaufspulen 3, das heißt eine Leerung der Ablage 4. Dabei kann es zugelassen werden, dass die zulässige Gesamtmasse um einen Toleranzwert überschritten wird. Beispielsweise wird angenommen, dass die zulässige Gesamtmasse bei 1200 kg liegt, wobei der vordefinierte Schwellwert zu 1200 kg gewählt ist. Befinden sich nun Auflaufspulen 3 mit einer Gesamtmasse von 1199 kg auf dem Transportband 5, wird noch kein Ausgabesignal ausgegeben. Durch Ablegen einer Auflaufspule 3 mit 5 kg Masse steigt die Gesamtmasse auf 1204 kg und damit über die zulässige Gesamtmasse. Ein derartiges Überschreiten kann aber im Rahmen einer Toleranz von beispielsweise 5 % der zulässigen Gesamtmasse akzeptiert werden. Der Toleranzbereich kann insbesondere auch so bemessen sein, dass mehrere Auflaufspulen 3 gleichzeitig auf das Transportband 5 abgelegt werden können. So kann die Gesamtmasse von 1199 kg durch gleichzeitiges Ablegen von zwei Auflaufspulen 3 mit einer Masse von jeweils 5 kg auf 1209 kg ansteigen. Alternativ kann der vordefinierte Schwellwert derart unterhalb der zulässigen Gesamtmasse gewählt werden, dass die zulässige Gesamtmasse mit großer Wahrscheinlichkeit zu keinem Zeitpunkt überschritten wird.

Das Ausgabesignal kann insbesondere von einem Ausgabeelement 10 ausgegeben werden. Das Ausgabeelement 10 kann insbesondere, wie im Beispiel der Fig. 1 gezeigt, in der Steuereinheit 6 vorgesehen sein. Insbesondere kann das Ausgabeelement 10 als Hardware und/oder Software implementiert sein.

Wird das Ausgabesignal ausgegeben, wird die Ablage 4 vorzugsweise geleert. Ist die Ablage 4 als ein Transportband 5 ausgebildet, erfolgt das vorzugsweise dadurch, dass das Transportband 5 nach Ausgabe des Ausgabesignals zum Abtransport der darauf abgelegten Auflaufspulen 3 gestartet wird. Die Auflaufspulen 3 können dann über das Transportband 5 beispielsweise in ein Lager transportiert werden, wo die Auflaufspulen 3 von dem Transportband 5 entnommen werden.

Das Ausgabesignal kann beispielsweise als Signal für einen Benutzer der Auflaufspulen herstellende Textilmaschine 1 ausgegeben werden, insbesondere optisch und/oder akustisch. Der Benutzer kann dann manuell den Abtransport der Auflaufspulen 3 einleiten, beispielsweise durch Starten des Transportbandes 5 über einen Startknopf. Alternativ kann das Ausgabesignal digital weiterverarbeitet werden. So kann das Transportband 5 beispielsweise automatisch durch das Ausgabesignal gestartet werden.

Weiterhin ist bevorzugt, dass bei Ausgabe des Ausgabesignals beziehungsweise bei Überschreiten des vordefinierten Schwellwerts ein Ablegen weiterer Auflaufspulen 3 auf die Ablage 4 beziehungsweise auf das Transportband 5 unterbunden wird. Dazu können insbesondere die Einrichtungen zum Ausstoßen der Auflaufspule 3 der Spulvorrichtungen 2 respektive die Serviceaggregate gesperrt werden, so dass durch diese kein Ablegen weiterer Auflaufspulen 3 auf die Ablage 4 beziehungsweise auf das Transportband 5 erfolgt. Die Einrichtungen respektive Serviceaggregate werden vorzugsweise wieder freigegeben, wenn der Abtransport der Auflaufspulen 3 aus der Ablage 4 beziehungsweise über das Transportband 5 beendet ist.

Das beschriebene Verfahren kann beispielhaft wie folgt zusammengefasst werden. Nachdem eine Einrichtung respektive ein Serviceaggregat eine Auflaufspule 3 ablegt hat, sendet das Serviceaggregat vorzugsweise via Telegramm der Steuereinheit 6 nicht nur das Ende des Ablagezyklusses, sondern zusätzlich auch die Masse der abgelegten Auflaufspule 3. Sollte nach X Ablagezyklen und X Summierungen die Gesamtmasse aller Auflaufspulen 3 die vordefinierte Schwelle von beispielsweise 1200 kg erreichen, wird durch das Ausgabesignal die Aufforderung ausgegeben, einen Abräumvorgang durchzuführen. Das beschriebene Verfahren hat damit den Vorteil, dass nicht eine vorgegebene Anzahl von Auflaufspulen das Limit bildet, sondern die wirkliche Masse der Auflaufspulen 3.

### Bezugszeichenliste

- **1**: Auflaufspulen herstellende Textilmaschine
- **2**: Spulvorrichtung
- **3**: Auflaufspule
- **4**: Ablage
- **5**: Transportband
- **6**: Steuereinheit
- **7**: Fadenlängenerfasser
- **8**: Ermittlungselement
- **9**: Summierer
- **10**: Ausgabeelement

## Patentansprüche

1. Auflaufspulen herstellende Textilmaschine (1), umfassend mindestens eine Arbeitsstelle mit einer Spulvorrichtung (2) zum Bespulen der Auflaufspulen (3) und eine Ablage (4) für bespulte Auflaufspulen (3), **gekennzeichnet durch** ein Ermittlungselement (8) zum Ermitteln der Masse einer jeden auf die Ablage (4) abzulegenden Auflaufspule (3), einen Summierer (9) zum Aufsummieren der ermittelten Massen der auf die Ablage (4) abzulegenden Auflaufspulen (3), und ein Ausgabeelement (10) zum Ausgeben eines Ausgabesignals, wenn die Summe der ermittelten Massen der Auflaufspulen (3) einen vordefinierten Schwellwert überschreitet.

2. Auflaufspulen herstellende Textilmaschine (1) nach Anspruch 1, wobei an das Ermittlungselement (8) für mindestens eine Spulvorrichtung (2) der Auflaufspulen herstellende Textilmaschine (1) ein jeweiliger Fadenlängenerfasser (7) angebunden ist.

3. Verfahren zum Betrieb einer Auflaufspulen herstellende Textilmaschine (1) mit mindestens einer Arbeitsstelle mit einer Spulvorrichtung (2) zum Bespulen der Auflaufspulen (3) und mit einer Ablage (4) für bespulte Auflaufspulen (3), **dadurch gekennzeichnet, dass** das Verfahren umfasst: Ermitteln der Masse einer jeden auf die Ablage (4) abzulegenden Auflaufspule (3), Aufsummieren der ermittelten Massen der auf die Ablage (4) abzulegenden Auflaufspulen (3), und Ausgeben eines Ausgabesignals, wenn die Summe der ermittelten Massen der Auflaufspulen (3) einen vordefinierten Schwellwert überschreitet.

4. Verfahren nach Anspruch 3, wobei die jeweilige Masse mindestens einer der Auflaufspulen (3) ermittelt wird, bevor die Auflaufspule (3) auf die Ablage (4) abgelegt wird.

5. Verfahren nach einem der Ansprüche 3 oder 4, wobei die jeweilige Masse mindestens einer der Auflaufspulen (3) durch Messung ermittelt wird.

6. Verfahren nach einem der Ansprüche 3 bis 5, wobei die jeweilige Masse mindestens einer der Auflaufspulen (3) basierend auf einer Länge eines auf die Auflaufspule (3) gespulten Fadens ermittelt wird.

7. Verfahren nach einem der Ansprüche 3 bis 6, wobei die Ablage (4) als ein Transportband (5) ausgebildet ist, das nach Ausgabe des Ausgabesignals zum Abtransport der darauf abgelegten Auflaufspulen (3) gestartet wird.

8. Steuereinheit (6), die zur Durchführung eines Verfahrens nach einem der Ansprüche 3 bis 7 bestimmt und eingerichtet ist.

9. Computerprogramm, das zur Durchführung eines Verfahrens nach einem der Ansprüche 3 bis 7 auf einer Auflaufspulen herstellenden Textilmaschine nach einem der Ansprüche 1 bis 2 bestimmt und eingerichtet ist.

10. Maschinenlesbares Speichermedium, auf dem ein Computerprogramm nach Anspruch 9 gespeichert ist.

## Claims

1. Textile machine (1) that produces take-up packages, comprising: - at least one workstation having a winding device (2) for winding the take-up packages (3); and - a depository (4) for wound take-up packages (3), **characterised by** a determining element (8) for determining the mass of each take-up package (3) to be deposited onto the depository (4), by a summer (9) for summing the determined masses of the take-up packages (3) to be deposited onto the depository (4), and by an output element (10) for outputting an output signal if the sum of the determined masses of the take-up packages (3) exceeds a predefined threshold value.

2. Textile machine (1) that produces take-up packages according to claim 1, wherein an individual thread length detector (7) is connected to the determining element (8) for at least one winding device (2) of the textile machine (1) that produces take-up packages.

3. Method for operating a textile machine (1) that produces take-up packages, comprising: - at least one workstation having a winding device (2) for winding the take-up packages (3); and - a depository (4) for wound take-up packages (3), **characterised in that** the method comprises: determining the mass of each take-up package (3) to be deposited onto the depository (4), summing the determined masses of the take-up packages (3) to be deposited onto the depository (4), and outputting an output signal if the sum of the determined masses of the take-up packages (3) exceeds a predefined threshold value.

4. Method according to claim 3, wherein the mass of at least one of the take-up packages (3) is determined before the take-up package (3) is deposited onto the depository (4).

5. Method according to claim 3 or 4, wherein the mass of at least one of the take-up packages (3) is determined by measurement.

6. Method according to one of claims 3 to 5, wherein the mass of at least one of the take-up packages (3) is determined on the basis of the length of a thread wound onto the take-up package (3).

7. Method according to one of claims 3 to 6, wherein the depository (4) is designed as a conveyor belt (5), which is started, after the output signal has been output, in order to transport away the take-up packages (3) deposited thereon.

8. Control unit (6), which is intended and designed to carry out a method according to one of claims 3 to 7.

9. Computer program, which is intended and designed to carry out a method according to one of claims 3 to 7 on a textile machine that produces take-up packages according to one of claims 1 to 2.

10. Machine-readable storage medium, on which a computer program according to claim 9 is stored.

## Revendications

1. Machine textile (1) produisant des bobines de réception, comprenant au moins un poste de travail avec un dispositif de bobinage (2) pour le bobinage des bobines de réception (3) et un support de dépose (4) pour les bobines de réception (3) bobinées, **caractérisée par** un élément de détection (8) pour la détermination de la masse de chaque bobine de réception (3) à déposer sur le support de dépose (4), un additionneur (9) pour l'addition des masses déterminées des bobines de réception (3) à déposer sur le support de dépose (4), et un élément émetteur (10) pour l'émission d'un signal de sortie lorsque la somme des masses déterminées des bobines de réception (3) dépasse une valeur seuil prédéfinie.

2. Machine textile (1) produisant des bobines de réception selon la revendication 1, sachant qu'un détecteur de longueur de fil (7) respectif est relié à l'élément de détection (8) pour au moins un dispositif de bobinage (2) de la machine textile (1) produisant des bobines de réception.

3. Procédé pour l'exploitation d'une machine textile (1) produisant des bobines de réception, avec au moins un poste de travail avec un dispositif de bobinage (2) pour le bobinage des bobines de réception (3) et avec un support de dépose (4) pour les bobines de réception (3) enroulées, **caractérisé en ce que** le procédé comprend : la détermination de la masse de chaque bobine de réception (3) à déposer sur le support de dépose (4), l'addition des masses déterminées des bobines de réception (3) à déposer sur le support de dépose (4), et l'émission d'un signal de sortie lorsque la somme des masses déterminées des bobines de réception (3) dépasse une valeur seuil prédéfinie.

4. Procédé selon la revendication 3, sachant que la masse respective d'au moins une des bobines de réception (3) est déterminée avant que la bobine de réception (3) ne soit déposée sur le support de dépose (4).

5. Procédé selon l'une des revendications 3 ou 4, sachant que la masse respective d'au moins une des bobines de réception (3) est déterminée par mesure.

6. Procédé selon l'une des revendications 3 à 5, sachant que la masse respective d'au moins une des bobines de réception (3) est déterminée sur la base d'une longueur d'un fil enroulé autour de la bobine de réception (3).

7. Procédé selon l'une des revendications 3 à 6, sachant que le support de dépose (4) est conçu comme une bande de transport (5) qui est mise en marche après l'émission du signal de sortie pour le transport des bobines de réception (3) déposées sur celui-ci.

8. Unité de commande (6) déterminée et créée pour l'exécution d'un procédé selon l'une des revendications 3 à 7.

9. Programme informatique déterminé et créé pour l'exécution d'un procédé selon l'une des revendications 3 à 7 sur une machine textile produisant des bobines de réception selon l'une des revendications 1 à 2.

10. Support de stockage lisible par machine sur lequel est stocké un programme informatique selon la revendication 9.
